**Europäisches Patentamt**

**European Patent Office**

**Office européen des brevets**

(19)

(11) Numéro de publication : **0 428 677 B1**

(12) **FASCICULE DE BREVET EUROPEEN**

(45) Date de publication du fascicule du brevet :
05.04.95 Bulletin 95/14

(51) Int. Cl.$^6$ : **G11B 11/10**

(21) Numéro de dépôt : **90908557.3**

(22) Date de dépôt : **01.06.90**

(86) Numéro de dépôt international :
**PCT/FR90/00386**

(87) Numéro de publication internationale :
**WO 90/15409 13.12.90 Gazette 90/28**

(54) **CIRCUIT DE COMMANDE DE MODULATION DU CHAMP MAGNETIQUE POUR L'ENREGISTREMENT D'UNE MEMOIRE MAGNETO-OPTIQUE.**

(30) Priorité : **02.06.89 FR 8907307**

(43) Date de publication de la demande :
**29.05.91 Bulletin 91/22**

(45) Mention de la délivrance du brevet :
**05.04.95 Bulletin 95/14**

(84) Etats contractants désignés :
**AT BE CH DE DK ES FR GB IT LI LU NL SE**

(56) Documents cités :
**EP-A- 0 251 561**
**EP-A- 0 312 143**
**US-A- 3 484 673**
**US-A- 3 737 735**

(56) Documents cités :
**I.E.E.E. TRANSACTIONS ON MAGNETICS, vol. 24, No. 1, January 1988, NEW YORK, USA, pages 666-669; D. RUGAR: MAGNETOOPTIC DIRECT OVERWRITE USING A RESONANT BIAS COIL" see page 666, left column, paragraph1 - right hand column, paragraph 2; figure 1**

(73) Titulaire : **THOMSON-CSF**
**173, Boulevard Haussmann**
**F-75008 Paris (FR)**

(72) Inventeur : **LEHUREAU, Jean-Claude**
**96, avenue du Général-Leclerc**
**F-91700 Ste-Geneviève-des-Bois (FR)**

(74) Mandataire : **Ruellan-Lemonnier, Brigitte et al**
**THOMSON CONSUMER ELECTRONICS**
**9 Place des Vosges**
**La Défense 10**
**F-92400 Courbevoie (FR)**

EP 0 428 677 B1

Jouve, 18, rue Saint-Denis, 75001 PARIS

## Description

La présente invention concerne un circuit de commande de modulation du champ magnétique pour l'enregistrement d'une mémoire magnéto-optique. Par mémoire magnéto-optique, on entend tout milieu d'enregistrement magnéto-optique présentant une anisotropie magnétique perpendiculaire à sa surface.

Un milieu d'enregistrement magnéto-optique ou mémoire magnéto-optique comporte essentiellement une couche magnétique stable à la température ambiante. Pour enregistrer ce type de mémoire, on magnétise préalablement la couche magnétique perpendiculairement à sa surface par exemple dans la direction vers le haut. L'enregistrement d'informations est réalisé en inversant localement le sens de l'aimantation par chauffage de la zone à enregistrer à une température supérieure à la valeur de Curie et application simultanée d'un champ magnétique extérieur. Lors du refroidissement à température ambiante, la nouvelle direction de magnétisation est "gelée". Le chauffage de la zone à enregistrer est en général réalisé à l'aide d'un faisceau laser tandis que le champ magnétique est obtenu à l'aide d'un générateur de champ magnétique tel qu'une bobine. En conséquence, pour enregistrer des informations, on peut moduler soit le faisceau laser, soit le générateur de champ magnétique.

La solution consistant à moduler le générateur de champ magnétique présente un certain nombre d'avantages. En effet, il y a parfaite symétrie entre les deux directions de magnétisation vers le haut et vers le bas, d'où une absence d'harmoniques d'ordre deux dans le signal relu. D'autre part, l'écriture peut se faire quel que soit l'état antérieur de magnétisation. En conséquence, il n'est pas nécessaire d'utiliser un cycle d'effacement avant d'écrire. Cependant, le fait de moduler le générateur de champ magnétique entraîne la manipulation d'énergie importante à fréquence élevée, ce qui se traduit par des pertes par dissipation très importantes.

Pour remédier à cet inconvénient, la demande de brevet EP-A-0 312 143 propose un appareil d'enregistrement magnéto-optique muni d'un modulateur de champ comportant une bobine pour générer un champ magnétique et un moyen de commutation.

La présente invention a pour but de fournir un nouveau circuit de commande de modulation du champ magnétique pour l'enregistrement d'une mémoire magnéto-optique qui soit de construction particulièrement simple et qui puisse être mis en oeuvre quel que soit le code de modulation utilisé pour les signaux-information à enregistrer.

En conséquence, la présente invention a pour objet un circuit de commande de modulation du champ magnétique pour l'enregistrement d'une mémoire magnéto-optique, par un signal information comportant, montés en parallèle, une première bobine générant un champ magnétique de polarité définie par le signal-information, une capacité et un circuit de commutation, l'ouverture et la fermeture du circuit de commutation étant commandées par une première impulsion de durée déterminée, générée lors de chaque transition du signal-information à enregistrer, caractérisé en ce qu'il comporte un circuit d'amorçage et d'entretien constitué par une seconde bobine montée sur le même noyau que la première bobine et connectée entre la masse et le point commun entre deux interrupteurs reliés respectivement à une tension positive et à une tension négative, l'ouverture et la fermeture des interrupteurs étant commandées respectivement par des deuxième et troisième impulsions à durée déterminée, la deuxième impulsion étant générée par le front descendant du signal-information à enregistrer tandis que la troisième impulsion est générée par le front montant du signal-information à enregistrer. Selon un mode de réalisation préférentiel, pour éviter des pertes d'énergie, la première impulsion a une durée $t = \pi \sqrt{LC}$, dans laquelle L représente l'inductance de la bobine et C la valeur de la capacité. Ainsi, les impulsions de fermeture du circuit de commutation ont lieu lorsque la tension au bord de la capacité est égale à zéro, c'est-à-dire au moment où la capacité est complètement déchargée.

D'autre part, la première impulsion est générée par un monostable connecté de manière à déclencher à chaque transition du signal-information à enregistrer.

Selon un mode de réalisation préférentiel, le circuit de commutation est constitué par au moins un transistor MOS de puissance recevant sur sa grille la première impulsion de durée déterminée.

Toutefois, pour éviter l'effet de diode passante sur le drain du transistor MOS, de préférence le circuit de commutation est constitué par deux transistors MOS montés tête-bêche, recevant respectivement sur leur grille la première impulsion à durée déterminée.

De préférence, les deuxième et troisième impulsions à durée déterminée ont une même durée que la première impulsion à durée déterminée. Chaque impulsion est générée par un monostable.

D'autres caractéristiques et avantages de la présente invention apparaîtront à la lecture de la description faite ci-après de différents modes de réalisation non limitatifs avec référence aux dessins ci-annexés, dans lesquels :

- la figure 1 est un schéma électrique d'un premier mode de réalisation électromécanique d'un circuit de commande conforme à la présente invention ;
- la figure 2 représente les signaux électriques en différents points ; et
- la figure 3 est un schéma électrique d'un mode de réalisation électronique du circuit de commande de la présente invention.

Pour simplifier la description, dans les dessins les mêmes éléments portent les mêmes références.

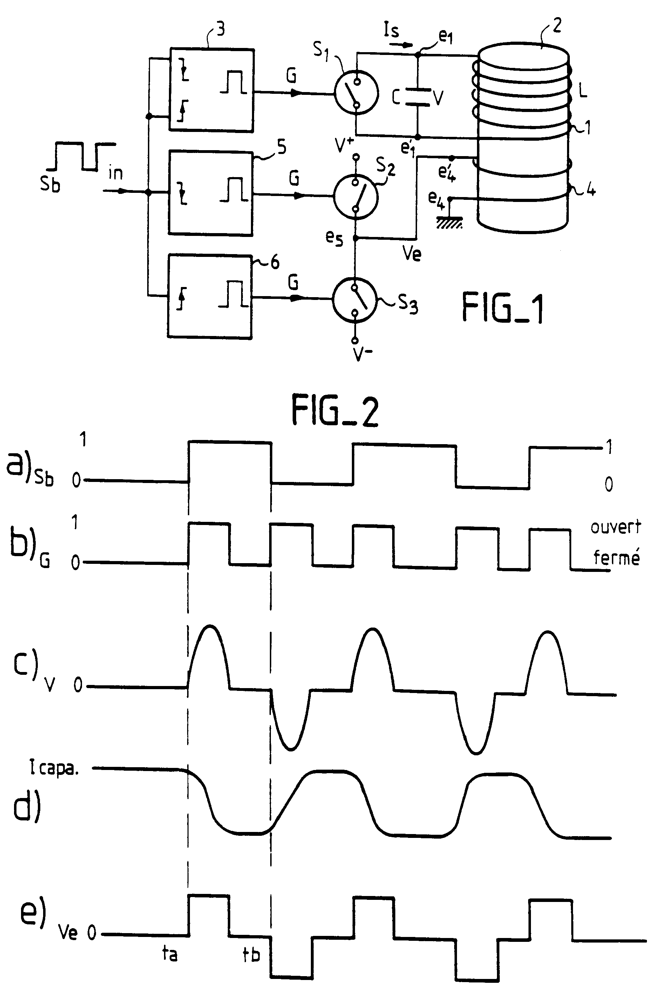

Le circuit de commande de la présente invention est constitué essentiellement d'une première bobine 1 montée sur un noyau magnétique 2 de manière à créer le champ magnétique extérieur permettant l'enregistrement d'un milieu d'enregistrement magnéto-optique qui n'a pas été représenté dans les dessins pour les simplifier. Sur les deux bornes e1 et e'1 de la bobine 1 sont montés en parallèle respectivement une capacité C et un circuit de commutation S1. L'ouverture et la fermeture du circuit de commutation S1 sont commandées par une impulsion G générée par un monostable 3. Comme représenté schématiquement sur la figure 1, le monostable 3 reçoit sur ses deux entrées le signal information à enregistrer Sb, à savoir un signal de forme binaire présentant un état bas ou "zéro" et un état haut ou "1". Les différentes bornes du circuit monostable 3 ont été connectées de manière connue de l'homme de l'art de telle sorte que le monostable 3 commute à chaque transition du signal information comme cela est symbolisé sur la figure 1.

D'autre part, pour permettre l'amorçage et l'entretien du circuit générant le champ magnétique constitué par la bobine 1, le circuit de commande de la présente invention comporte de plus une bobine 4 bobinée sur le noyau 2 et qui, en fait, constitue le primaire du circuit formé des bobines 1 et 4. Une des bornes e4 de la bobine 4 est reliée à la masse tandis que l'autre borne e'4 est reliée au point commun e5 entre deux commutateurs S2, S3 montés en série entre une tension positive +V et une tension négative -V. L'ouverture et la fermeture des commutateurs S2 et S3 sont commandées par des deuxième et troisième impulsions à durée déterminée. En fait, les deuxième et troisième impulsions ont des durées identiques à l'impulsion G et seront référencées de la même manière sur la figure 1. La deuxième impulsion est issue d'un monostable 5 qui reçoit en entrée le signal-information Sb et dont les bornes sont connectées de manière à déclencher sur le front descendant du signal-information. Le commutateur S3 reçoit une impulsion à durée déterminée issue d'un monostable 6. Ce monostable 6 reçoit en entrée le signal-information Sb et ses bornes sont connectées de manière à déclencher sur le front montant du signal.

On expliquera maintenant avec référence à la figure 2 le fonctionnement du circuit décrit ci-dessus. Comme représenté en (a) sur la figure 2, le signal-information Sb est un signal binaire constitué d'une suite d'informations à un niveau bas "0" et à un niveau haut "1". Ce signal-information Sb peut avoir l'allure du signal représenté en (a) sur la figure 2, à titre d'exemple. En général, les informations à enregistrer sont codées en utilisant des codes binaires asynchrones qui présentent l'avantage d'être compacts.

Le signal Sb est appliqué notamment sur le monostable 3. Lorsque le signal Sb passe de 0 à 1 comme représenté au temps ta, le monostable est déclenché et émet une impulsion G calibrée, c'est-à-dire une impulsion de durée déterminée T. Pendant la durée de cette impulsion, le commutateur S1 est ouvert. Le courant IS qui transitait dans la bobine 1 et le circuit de commutation S1, se réfléchit alors dans la capacité C. La tension V aux bornes de la capacité C se met à osciller, le circuit constitué de la capacité C et de la bobine 1 formant un circuit oscillant. Lorsque l'impulsion G est terminée, on referme le circuit de commutation S1 et la tension aux bornes de la capacité devient égale à zéro. Pour éviter les pertes dissipatives, on choisit la durée de l'impulsion G de telle sorte que $T = \pi \sqrt{LC}$, c'est-à-dire que T correspond à une demi-alternance du circuit oscillant formé par la capacité C et la bobine 1. Ainsi, le circuit de commutation S1 se ferme au moment même où la tension V aux bornes de la capacité passe à zéro, comme représenté en (c) sur la figure 2. Alors le courant I se maintient dans la bobine 1. Ce courant est négatif comme représenté en (d) sur la figure 2 et le sens de l'aimantation est inversé. Lors d'une nouvelle transition du signal-information Sb, qui passe d'un niveau "1" à un niveau "0" comme représenté au temps tb sur la figure 2, le monostable 3 génère une nouvelle impulsion G qui ouvre à nouveau le circuit de commutation S1. A nouveau le courant IS négatif qui transitait par la bobine se réfléchit alors dans la capacité C et une tension négative V se développe dans la capacité C, comme représenté en (c) sur la figure 2. Le courant dans la bobine 1 circule dans l'autre sens de manière à induire un champ magnétique de direction opposée au champ magnétique induit pendant la période ta, tb. D'autre part, comme représenté en (e) sur la figure 2, à chaque transition la tension VE est positive ou négative de manière à injecter, par l'intermédiaire de la bobine 4, un flux supplémentaire dans le circuit de la bobine 1 pour compenser les pertes dissipatives qui ont lieu lors de la transition et lors du maintien.

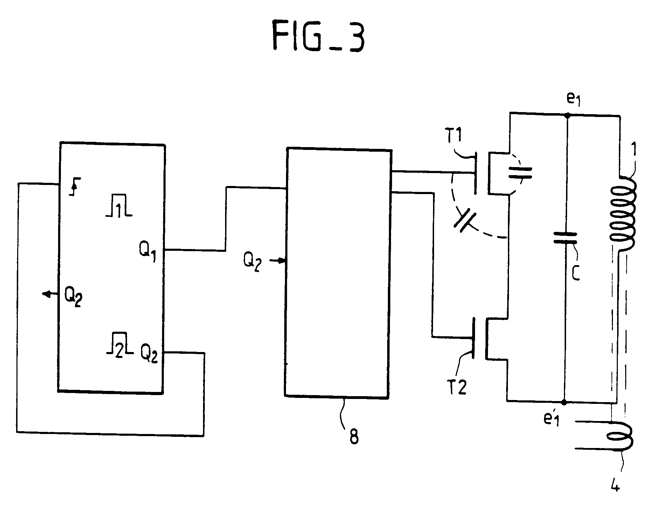

Comme représenté sur la figure 3, le circuit de commutation S1 peut être réalisé en utilisant deux transistors MOS de puissance T1 et T2 montés tête-bêche. A savoir, le drain du transistor T2 est connecté au drain du transistor T1 et les sources des transistors T1 et T2 sont respectivement connectées aux bornes e1 et e'1 de la bobine 1. Dans ce cas, les grilles des transistors T1 et T2 reçoivent d'un circuit de commande 8 une impulsion G.

Ce dispositif 8 reçoit en entrée la sortie Q1 d'un monostable 3. Le monostable 3 reçoit sur une de ses entrées le signal information Sb et la sortie Q2 du monostable 3 est connectée sur cette entrée de telle sorte que le monostable 3 bascule pour chaque transition.

A titre d'exemple, la bobine 1 présente une inductance de 45 μH, la capacité C une capacitance de 2 nF.

## Revendications

1. Circuit de commande de modulation du champ magnétique pour l'enregistrement d'une mémoire magnéto-optique par un signal-information comportant, montés en parallèle, une première bobine (1) générant un champ magnétique de polarité définie par le signal-information, une capacité (C) et un circuit de commutation (S1), l'ouverture et la fermeture du circuit de commutation étant commandées par une première impulsion (G) de durée déterminée générée lors de chaque transition du signal-information à enregistrer, caractérisé en ce qu'il comporte un circuit d'amorçage et d'entretien (4, 5, 6, S2, S3) constitué par une seconde bobine (4) montée sur le même noyau que la première bobine (1) et connectée entre la masse et le point commun (e5) entre deux interrupteurs (S2, S3) reliés respectivement à une tension positive (+V) et à une tension négative (-V), l'ouverture et la fermeture des interrupteurs étant commandées respectivement par des deuxième et troisième impulsions à durée déterminée, la deuxième impulsion étant générée par le front descendant du signal-information à enregistrer tandis que la troisième impulsion est générée par le front montant du signal-information à enregistrer.

2. Circuit selon la revendication 1, caractérisé en ce que la première impulsion (G) a une durée t = π $\sqrt{LC}$, dans laquelle L représente l'inductance de la bobine (1) et C la valeur de la capacité (C).

3. Circuit selon l'une quelconque des revendications 1 et 2, caractérisé en ce que la première impulsion est générée par un monostable (3) recevant sur ses deux entrées le signal information (Sb) à enregistrer.

4. Circuit selon l'une quelconque des revendications 1 à 3, caractérisé en ce que le circuit de commutation est constitué par au moins un transistor MOS de puissance recevant sur sa grille la première impulsion de durée déterminée.

5. Circuit selon la revendication 4, caractérisé en ce que le circuit de commutation est constitué par deux transistors MOS (T1, T2) montés tête-bêche, recevant respectivement sur leur grille la première impulsion (G) à durée déterminée.

6. Circuit selon la revendication 1, caractérisé en ce que les deuxième et troisième impulsions à durée déterminée ont une même durée que la première impulsion à durée déterminée.

7. Circuit selon l'une quelconque des revendications 1 et 6, caractérisé en ce que les deuxième et troisième impulsions à durée déterminée sont générées chacune par un monostable (5, 6).

## Patentansprüche

1. Schaltung zur Steuerung der Modulation des Magnetfelds für die magneto-optische Speicherung eines Informationssignals, mit einer Parallelschaltung einer ersten ein Magnetfeld einer bestimmten Polarität aufgrund des Informationssignals erzeugenden Spule (1), eines Kondensators (C) und eines Schalters (S1), dessen Öffnen und Schließen durch einen ersten Impuls (G) bestimmter Dauer bei jedem Übergang des aufzuzeichnenden Informationssignals gesteuert werden, dadurch gekennzeichnet, daß die Schaltung eine Aktivierungs- und Halteschaltung (4, 5, 6, S2, S3) aufweist, bestehend aus einer zweiten Spule (4), die auf denselben Kern wie die erste Spule (1) gewickelt ist und zwischen Masse und den gemeinsamen Punkt (e5) zweier an eine positive Spannung (V$^+$) bzw. negative Spannung (V$^-$) angeschlossener Schalter geschaltet ist, wobei Öffnen und Schließen dieser Schalter durch zweite und dritte Impulse einer bestimmten Dauer gesteuert werden und der zweite Impuls durch die abfallende Flanke des aufzuzeichnenden Informationssignals erzeugt wird, während der dritte Impuls durch die ansteigende Flanke des aufzuzeichnenden Informationssignals erzeugt wird.

2. Schaltung nach Anspruch 1, dadurch gekennzeichnet, daß der erste Impuls (G) eine Dauer t von ungefähr $\pi.\sqrt{LC}$ besitzt, wobei L die Induktivität der Spule (1) und C die Kapazität des Kondensators (C) bedeutet.

3. Schaltung nach einem beliebigen der Ansprüche 1 und 2, dadurch gekennzeichnet, daß der erste Impuls von einer monostabilen Kippstufe (3) erzeugt wird, die an ihren beiden Eingängen das aufzuzeichnende Informationssignal (Sb) empfängt.

4. Schaltung nach einem beliebigen der Ansprüche 1 bis 3, dadurch gekennzeichnet, daß der Schalter von mindestens einem MOS-Leistungstransistor gebildet wird, der an seinem Gate den ersten Impuls bestimmter Dauer empfängt.

5. Schaltung nach Anspruch 4, dadurch gekennzeichnet, daß der Schalter aus zwei MOS-Transistoren (T1, T2) in Antiserienschaltung besteht, die je an ihrem Gate den ersten Impuls (G) bestimmter Dauer empfangen.

6. Schaltung nach Anspruch 1, dadurch gekennzeichnet, daß der zweite und der dritte Impuls vorbestimmter Dauer die gleiche Dauer wie der erste Impulses vorbestimmter Dauer aufweisen.

7. Schaltung nach einem beliebigen der Ansprüche 1 und 6, dadurch gekennzeichnet, daß der zweite und der dritte Impuls vorbestimmter Dauer je in einer monostabilen Kippstufe (5, 6) erzeugt werden.

**Claims**

1. Magnetic field modulation control circuit for recording a magneto-optic memory using an information signal and including, mounted in parallel, a first coil (1) generating a magnetic field with polarity defined by the information signal, a capacitor (C) and a switching circuit (S1), the opening and closing of the switching circuit being controlled by a first pulse (G) of specified duration generated during each transition of the information signal to be recorded, characterized in that it includes an energizing and sustaining circuit (4, 5, 6, S2, S3) consisting of a second coil (4) mounted on the same core as the first coil (1) and connected between earth and the common point (e5) between two on/off switches (S2, S3) connected respectively to a positive voltage (+V) and to a negative voltage (-V), the opening and closing of the on/off switches being controlled respectively by second and third pulses of specified duration, the second pulse being generated by the falling edge of the information signal to be recorded whilst the third pulse is generated by the rising edge of the information signal to be recorded.

2. Circuit according to Claim 1, characterized in that the first pulse (G) has a duration $t = \pi\sqrt{LC}$, in which L represents the inductance of the coil (1) and C the value of the capacitor (C).

3. Circuit according to either of Claims 1 and 2, characterized in that the first pulse is generated by a monostable (3) receiving on its two inputs the information signal (Sb) to be recorded.

4. Circuit according to any one of Claims 1 to 3, characterized in that the switching circuit consists of at least one MOS power transistor receiving on its gate the first pulse of specified duration.

5. Circuit according to Claim 4, characterized in that the switching circuit consists of two MOS transistors (T1, T2) mounted head-to-tail, receiving respectively on their gate the first pulse (G) of specified duration.

6. Circuit according to Claim 1, characterized in that the second and third pulses of specified duration have the same duration as the first pulse of specified duration.

7. Circuit according to any one of Claims 1 to 6, characterized in that the second and third pulses of specified duration are each generated by a monostable (5, 6).

FIG_1

FIG_2

a) Sb

b) G

c) V

d) I capa.

e) Ve

ta    tb

# FIG_3